**Europäisches Patentamt**

**European Patent Office**

**Office européen des brevets**

(19)

(11) Veröffentlichungsnummer **0 042 985**
**B1**

(12) # EUROPÄISCHE PATENTSCHRIFT

(45) Veröffentlichungstag der Patentschrift:
19.09.84

(21) Anmeldenummer: 81104208.4

(22) Anmeldetag: 02.06.81

(51) Int. Cl.³: **C 08 F 279/02**, C 08 F 2/38 //
(C08F279/02, 212/06)

(54) **Verfahren zur kontinuierlichen Herstellung von mit Kautschuk modifizierten Polymerisaten von Vinylaromaten.**

(30) Priorität: 25.06.80 DE 3023721

(43) Veröffentlichungstag der Anmeldung:
06.01.82 Patentblatt 82/1

(45) Bekanntmachung des Hinweises auf die Patenterteilung:
19.09.84 Patentblatt 84/38

(84) Benannte Vertragsstaaten:
**BE DE FR GB IT NL**

(56) Entgegenhaltungen:
**FR - A - 1 395 954**
**FR - A - 2 322 885**
**FR - A - 2 346 381**
**GB - A - 1 121 885**
**US - A - 3 781 383**
**US - A - 3 903 202**
**US - A - 3 914 339**

(73) Patentinhaber: **BASF Aktiengesellschaft,
Carl-Bosch-Strasse 38, D-6700 Ludwigshafen (DE)**

(72) Erfinder: **Echte, Adolf, Dr., Leuschnerstrasse 42,
D-6700 Ludwigshafen (DE)**
Erfinder: **Gausepohl, Hermann, Dr., Neuweg 10,
D-6704 Mutterstadt (DE)**
Erfinder: **Hofmann, Hermann Pankraz, Dr.,
Albrecht-Duerer-Strasse 24 A, D-6710 Frankenthal (DE)**
Erfinder: **Mittnacht, Hans, Dr., Zinkgraefstrasse 44,
D-6940 Weinheim (DE)**

**Beschreibung**

Die Erfindung betrifft ein kontinuierliches Verfahren zur Herstellung von mit Kautschuk modifizierten Polymerisaten von Vinylaromaten. Das Verfahren wird in Abwesenheit von Radikalinitiatoren und in Gegenwart von Mercaptanen als Kettenüberträger durchgeführt.

Zum Stand der Technik nennen wir

(1) US-PS 3 903 202
(2) US-PS 3 243 481
(3) DE-AS 2 131 141
(4) DE-AS 1 595 210

Die kontinuierliche Polymerisation von schlagfestem Polystyrol in zwei, drei oder mehreren Reaktionszonen ist seit langem bekannt [vgl. dazu (1) oder (2)]. Ebenso ist es bekannt, zur Einstellung des Molekulargewichts Kettenüberträger, wie nitrosogruppenhaltige Verbindungen oder Mercaptane zu verwenden [vgl. dazu (1), (2) bzw. (4)]. In (3) wird ferner vorgeschlagen, den Kettenregler nach einem gewissen Umsatz, der zwischen 3,5 und 15 Gew.-% liegen soll, zuzusetzen.

Die Polymerisation wird nach der Lehre von (3) zunächst in Masse und in Abwesenheit eines Initiators durchgeführt. Nach Zugabe des Kettenüberträgers wird weiterpolymerisiert bis zu einem Umsatz von 20 bis 40 Gew.-%, um die Reaktion anschließend in einer dritten Stufe in Gegenwart von Lauroylperoxid zu Ende zu führen. Nach dem beschriebenen Verfahren werden Produkte mit hohem Glanz und kleinen Kautschukteilchen erhalten. Der Nachteil des bekannten Verfahrens besteht jedoch darin, daß ein nennenswerter Anteil von niedermolekularen Polymeren entsteht, die den Erweichungspunkt der Fertigprodukte herabsetzen und bei der Verarbeitung zum Ausschwitzen neigen. Diese niedermolekularen Anteile erniedrigen ferner die Schlagzähigkeit, wenn keine oder nur geringe Mengen Initiatoren verwendet werden (vgl. (3), Spalte 5, Zeilen 40 bis 45). Andererseits führen die in (3) angewendeten Initiatorkonzentrationen aber bei einer kontinuierlichen Polymerisation in Masse oder Lösung zu unkontrollierbaren Reaktionen.

Es bestand daher die Aufgabe, für die kontinuierliche Polymerisation ein Verfahren zu finden, das den Einsatz von Initiatoren vermeidet aber dennoch zu Produkten mit guten Glanzeigenschaften bzw. kleinen Teilchen führt, ohne daß Verluste im mechanischen Niveau in Kauf genommen werden müssen. Dies konnte überraschenderweise dadurch erreicht werden, daß man den Kettenüberträger nach der zweiten Verfahrensstufe zuführt und außerdem die Reaktion nicht bis zum vollständigen Umsatz führt, sondern diese vorzeitig abbricht. Der überraschende Effekt konnte in keiner Weise vorhergesehen werden, zumal in (4), Spalte 10, Zeilen 65 bis 69, empfohlen wird, den Umsatz so hoch wie möglich zu treiben.

Die Erfindung betrifft daher ein Verfahren zur kontinuierlichen Herstellung von mit Kautschuk modifizierten Polymerisaten von Vinylaromaten, wobei man ein Gemisch, das mindestens eine monomere aromatische Vinylverbindung und mindestens ein kautschukartiges, überwiegend aus 1,3-Dienen aufgebautes Polymerisat, in einem Anteil von 3 bis zu 16 Gew.-%, bezogen auf Monomere(s), wird und falls ein Lösungsmittel enthält, in Abwesenheit von Radikalinitiatoren, jedoch in Gegenwart von Mercaptanen als Kettenüberträger bei Temperaturen von 80 bis 180° C.

a) in einer ersten Verfahrensstufe unter Rühren bis zu einem maximalen Umsatz, $U_{max}$, bezogen auf Monomere(s) führt, der der Beziehung

$$U_{max} = K - 1$$

genügt [K = Kautschukmenge in Gew.-%, bezogen auf Monomere(s)],

b) in einer zweiten Verfahrensstufe unter Rühren bis zu Umsätzen von bis zu etwa 50 Gew.-% weiterpolymerisiert und

c) in mindestens einer weiteren Verfahrensstufe weiterpolymerisiert, das Polymerisat in einer Entgasungszone von vinylaromatischen Monomeren und gegebenenfalls vom Lösungsmittel befreit und letztere in den Prozeß zurückführt. Dieses Verfahren ist dadurch gekennzeichnet, daß der Kettenüberträger nach der zweiten Verfahrensstufe b) in Mengen von 0,01 bis 0,2 Gew.-%, bezogen auf vinylaromatisches Monomeres, eingeführt wird und daß man die Polymerisation in der(n) Verfahrensstufe c) zu einem Umsatz von weniger als 85 Gew.-%, bezogen auf Monomere(s), führt.

Die kontinuierliche Herstellung von mit Kautschuk modifizierten Polymerisaten von Vinylaromaten ist insbesondere in (2) hinreichend beschrieben (vgl. das Verfahrensprinzip Kessel-Turmkaskade), so daß bezüglich der Durchführung des kontinuierlichen Verfahrens auf diese Druckschrift verwiesen werden kann.

Als aromatische Vinylverbindungen kommen für das erfindungsgemäße Verfahren Styrol, sowie dessen Derivate wie ı-Methylstyrol, o-, m-, p-Methylstyrol, 2,4-Dimethylstyrol bzw. tert.-Butylstyrol in Betracht. Bevorzugt wird Styrol verwendet.

An das kautschukartige, überwiegend aus 1,3-Dienen aufgebaute Polymerisat werden keine besonderen Anforderungen gestellt. Es eignen sich sowohl natürliche als auch synthetische Polybutadiene, gleichfalls Polyisoprenkautschuke oder auch Styrolbutadien-Blockcopolymerisate vom Typ SB bzw. Dreiblock-Copolymerisate vom Typ BSB oder SBS. Besonders bevorzugt werden Dienkautschuke angewendet, die ca. 10 Gew.-% 1,2-Vinylanteile aufweisen oder sogenannte high-cis-Typen mit mehr als 96 Gew.-% an cis-Struktur.

Das erfindungsgemäße Verfahren kann sowohl in Masse als auch in Lösung durchgeführt werden. Bei der Polymerisation in Masse wird der Kautschuk in dem zu polymerisierenden vinylaromatischen Monomeren gelöst und dann die Polymerisation begonnen. Als geeignete Lösungsmittel kommen Toluol, Xylol, Äthylbenzol, Methyläthylketon oder Tetrahydrofuran in Frage. Die Lösungsmittel werden in Mengen von 2 bis 15 Gew.-%, bezogen auf Monomere(s) angewendet. Besonders bevorzugt wird Äthylbenzol als Lösungsmittel in den genannten Mengen.

Als Kettenüberträger kommen die üblicherweise verwendeten Mercaptane mit 1 bis 14 C-Atomen für das erfindungsgemäße Verfahren in Betracht. Von den Mercaptanen hat sich besonders das tert.-Dodecylmercaptan bewährt. Die Menge an Mercaptan beträgt 0,01 bis 0,2 Gew.-%, bezogen auf das vinylaromatische Monomere. Die aus diesem Bereich ausgewählte Menge richtet sich nach dem gewünschten Schmelzfluß der herzustellenden Polymerisate. Aus technischen Gründen (Dosiergenauigkeit, Einmischbarkeit) ist es zweckmäßig, den Kettenüberträger nicht in reiner Form, sondern gelöst in einem Lösungsmittel, wie Toluol, Äthylbenzol, Xylol, Methyläthylketon oder zusammen mit einem Gleitmittel, wie Paraffinöl oder Butylstearat oder in einer kleinen Menge des Monomeren zuzuführen. Wird der Regler in der ersten Verfahrensstufe zugeführt, so ist die Oberflächenrauhtiefe bzw. der Glanz der erhaltenen Polymerisate unzureichend. Die Reglerzugabe sollte bei Umsätzen nicht unter 20 Gew.-% erfolgen. Es wird beim erfindungsgemäßen Verfahren bevorzugt, den Regler in der dritten Verfahrensstufe zuzuführen.

Dem Fachmann ist bekannt, wie er die erste und alle weiteren Verfahrensstufen durchzuführen hat. Es ist ferner bekannt, daß bezüglich des Rührens die zweite Verfahrensstufe kritisch ist. Auch die in den verschiedenen Verfahrensstufen anzuwendenden Temperaturen sind dem Fachmann geläufig. Die Polymerisationstemperaturen liegen im Bereich von 80 bis 180°C, wenn alle Verfahrensstufen berücksichtigt sind. In der Trockenstufe bzw. Entgasungsstufe werden sogar höhere Temperaturen angewendet.

Wesentlich ist, daß der Endumsatz auf einen Umsatz von kleiner als 85 Gew.-%, bezogen auf Monomeres, beschränkt bleibt. Dieser Umsatz erweist sich im erfindungsgemäßen Verfahren als kritisch, da bei größeren Umsätzen die an sich anstrebenswert wären, die Mechanik der erhaltenen Polymerisate deutlich schlechter wird. Der Umsatz läßt sich leicht aus dem Feststoffgehalt berechnen, der seinerseits nach Methoden bestimmt werden kann, die dem Fachmann geläufig sind. Beispielsweise kann nach einer Probenahme das nicht umgesetzte Monomere titrimetrisch bestimmt werden bzw. nach einer Stabilisierung mit Polymerisationsinhibitoren abgedampft und der Rückstand gravimetrisch ermittelt werden.

Die in den Beispielen und Vergleichsversuchen aufgeführten Produkteigenschaften wurden wie folgt gemessen:

1. Streckspannung nach DIN 53 455
2. Reißfestigkeit nach DIN 53 455
3. Schmelzindex nach DIN 53 735
4. die mittlere Teilchengröße durch Auszählen anhand elektronenmikroskopischer Aufnahmen
5. der Glanz wurde mit einem Multiflexgalvanometer nach Dr. Lange gemessen; dazu wurden die erhaltenen Produkte bei einer Temperatur von 260°C spritzgegossen. An diesen Spritzlingen wird die relative Reflexion der Oberfläche in Prozent des eingefallenen Lichts gemessen. Als Standard dient Filterpapier mit einem Reflexionswert von 0%.

Die Erfindung wird nachstehend anhand von Beispielen und Vergleichsversuchen näher erläutert. Alle darin angegebenen Teile und Prozente beziehen sich, sofern nichts anderes vermerkt ist, auf das Gewicht.

Beispiel 1

In einer 2-Kessel-2-Turmkaskade wurde eine Mischung von 7,2 Teilen eines Polybutadiens mit einem cis-Anteil von 98%, zusammen mit 85,7 Teilen Styrol, 6 Teilen Äthylbenzol und 0,1 Teilen Octadecyl3-(3',5'-di-tert.-butyl-4'-hydroxiphenyl)-propionat thermisch polymerisiert. Der Durchsatz betrug 4 l/Stunde. Die in den einzelnen Reaktoren angewendeten Rührgeschwindigkeiten, Temperaturen sowie die eingestellten integralen Umsätze sind in der Tabelle 1 enthalten. In den dritten Reaktor wurden dem Polymerstrom 0,02 Gew.-% tert.-Dodecylmercaptan, bezogen auf Styrol, gelöst in 0,5% Paraffinöl, kontinuierlich zudosiert. Die Polymerisatmischung wurde nach der Polymerisation in einer Entgasungszone bei 220 bis 240°C vom Lösungsmittel und Restmonomeren befreit. Die Eigenschaften des dabei erhaltenen Produktes sind in der Tabelle 2 zusammen mit den Eigenschaften, der Produkte aus den Vergleichsversuchen 1 und 2, aufgeführt.

### Vergleichsversuch 1

Beispiel 1 wurde wiederholt mit der Maßgabe, daß der Kettenüberträger bereits in der ersten Verfahrensstufe kontinuierlich zugegeben wurde. Die erhaltenen Produkteigenschaften sind in der Tabelle 2 denen von Beispiel 1 gegenübergestellt. Aus einem Vergleich dieser Eigenschaften geht hervor, daß sowohl die Streckspannung und Reißfestigkeit als auch der Glanz stark vermindert sind, wenn man den Kettenüberträger in die erste Verfahrensstufe a) zufügt.

### Vergleichsversuch 2

7,78 Teile Polybutadien, 85,12 Teile Styrol, Rest Lösungsmittel wurden in der in Beispiel 1 beschriebenen Weise kontinuierlich polymerisiert mit der Maßgabe, daß die Polymerisation in der 4. Verfahrensweise erst bei einem Umsatz von 92% abgebrochen wurde. Die Umsätze betrugen dabei:

| Reaktor | Umsatz (%) |
|---------|-----------|
| Kessel 1 | 4,3 |
| Kessel 2 | 22,2 |
| Turm 1 | 53,4 |
| Turm 2 | 92,0 |

Die Eigenschaften des erhaltenen Produktes sind in der Tabelle 2 angegeben. Verglichen mit den Produkten gemäß der vorliegenden Erfindung ist ersichtlich, daß bei Erhöhung des Umsatzes die Zähigkeit abnimmt.

Tabelle 1

| Ort | Rührgeschwindigkeit [Upm] | Temp. [°C] | Umsatz (Integral) |
|-----|---------------------------|------------|--------------------|
| 1. Rührreaktor | 100 | 104 | 3,8 |
| 2. Rührreaktor | 160 | 132 | 20,3 |
| 1. Turm | 15 | 101 | 55,3 |
| 2. Turm | 3 | 127 | 84,3 |
| Entgasung | — | 250 | — |

Tabelle 2

| | Beispiel 1 | Vergleichs-vers. 1 | Vergleichs-vers. 2 |
|---|---|---|---|
| Streckspannung [N/mm$^2$] | 27,3 | 22,6 | 26,8 |
| Reißfestigkeit [N/mm$^2$] | 22,5 | 19,1 | 21,7 |
| Lochkerbschlagzähigkeit [kJ/m$^2$] | 10,5 | 10,4 | 8,5 |
| Schmelzindex (5/200) [g/10'] | 3,0 | 2,6 | 3,9 |
| mittlere Teilchengröße [μm] | 1,2 | 3,5 | 1,4 |
| Glanz (Reflexion) [%] | 51,4 | 22,6 | 47,8 |

## Patentanspruch

Verfahren zur kontinuierlichen Herstellung von mit Kautschuk modifizierten Polymerisaten von Vinylaromaten, wobei man ein Gemisch, das mindestens eine monomere aromatische Vinylverbindung und mindestens ein kautschukartiges, überwiegend aus 1,3-Dienen aufgebautes Polymerisat, in einem Anteil von 3 bis zu 16 Gew.-%, bezogen auf Monomere(s), sowie gegebenenfalls ein Lösungsmittel enthält, in Abwesenheit von Radikalinitiatoren, jedoch in Gegenwart von Mercaptanen als Kettenüberträger bei Temperaturen von 80 bis 180° C

a) in einer ersten Verfahrensstufe unter Rühren bis zu einem maximalen Umsatz, $U_{max}$, bezogen auf Monomere(s) führt, der der Beziehung

$$U_{max} = K - 1$$

genügt [K = Kautschukmenge in Gew.-%, bezogen auf Monomere(s)],

b) in einer zweiten Verfahrensstufe unter Rühren bis zu Umsätzen von bis zu etwa 50 Gew.-% weiterpolymerisiert und

c) in mindestens einer weiteren Verfahrensstufe weiterpolymerisiert, das Polymerisat in einer Entgasungszone von vinylaromatischen Monomeren und gegebenenfalls vom Lösungsmittel befreit und letztere in den Prozeß zurückführt, dadurch gekennzeichnet, daß der Kettenüberträger nach der zweiten Verfahrensstufe b) in Mengen von 0,01 bis 0,2 Gew.-%, bezogen auf vinylaromatisches Monomeres, eingeführt wird und daß man die Polymerisation in der(n) Verfahrensstufen (c) zu einem Umsatz von weniger als 85 Gew.-%, bezogen auf Monomere(s), führt.

## Claim

A process for the continuous preparation of a rubber-modified polymer of a vinyl-aromatic, in which a mixture which contains one or more monomeric aromatic vinyl compounds and from 3 to 16% by weight, based on monomer or monomers, of one or more elastomeric polymers consisting principally of polymerized 1,3-diene units, with or without a solvent, is polymerized, in the absence of a free radical initiator but in the presence of a mercaptan as a chain transfer agent, at from 80 to 180° C,

a) in a first process stage, with stirring, up to a maximum conversion $U_{max}$, based on monomer or monomers, given by the equation

$$U_{max} = K - I$$

where K is the amount of rubber in % by weight, based on monomer or monomers,

b) is then polymerized further, in a second process stage, with stirring, to a conversion of up to about 50% by weight, and

c) is then polymerized further, in one or more additional process stages, after which the polymer is treated in a devolatilization zone to remove vinylaromatic monomers and solvents, if any, and these constituents are recycled to the process, wherein the chain transfer agent is introduced after the second process stage b), in an amount of from 0.01 to 0.2% by weight, based on vinyl-aromatic monomer, and wherein the polymerization in process stage or stages c) is taken to a monomer conversion of less than 85% by weight.

## Revendication

Procédé pour la préparation en continu de polymères de composés vinyl-aromatiques modifiés par du caoutchouc, dans lequel un mélange composé d'au moins un composé vinylique aromatique monomère, d'au moins un polymérisat caoutchouteux dérivé principalement de diènes-1,3 en une proportion de 3 jusqu'à 16% en poids par rapport au(x) monomère(s) et éventuellement d'un solvant, est polymérisé en l'absence d'initiateurs radicalaires, mais en présence de mercaptans comme agents de transfert de chaîne, à des températures de 80 à 180° C

a) dans un premier stade opératoire, sous agitation, jusqu'à un taux de transformation maximal $U_{max}$ du ou des monomères, qui satisfait à la relation

$$U_{max} = K - 1,$$

où K est le pourcentage en poids du caoutchouc par rapport au(x) monomère(s);

b) dans un deuxième stade opératoire, sous agitation, jusqu'à un taux de transformation pouvant aller jus-qu'à 50% en poids environ, et

c) dans au moins un stade opératoire supplémentaire, puis les monomères vinyl-aromatiques et le solvant éventuel sont séparés du polymère dans une zone de dégazage et recyclés dans le procédé, caractérisé en ce que l'agent de transfert de chaîne est introduit après le stade opératoire b) en une proportion de 0,01 à 0,2% en poids par rapport au monomère vinyl-aromatique et la polymérisation est continuée dans le(s) stade(s) opératoire(s) c) jusqu'à un taux de transformation inférieur à 85% en poids par rapport au(x) monomère(s).